# DEMANDE DE BREVET EUROPEEN

(11) **EP 0 884 470 A1**
(43) Date de publication de la demande: **16.12.1998**
(21) Numéro de dépôt: 98401409.2
(22) Date de dépôt: 11.06.1998
(51) Int. Cl.: F02K 1/70, F02K 1/72

(54) **Inverseur de poussée à portes de turboréacteur à section variable d'éjection**

(30) Priorité: 12.06.1997 FR 9707278
(71) Demandeur: Hispano-Suiza Aérostructures, 76700 Gonfreville l'Orcher (FR)
(72) Inventeur: Gonidec, Patrick, 76290 Montivilliers (FR); Vauchel, Guy Bernard, 76610 Le Havre (FR)

(57) **Abrégé**

Un inverseur de poussée de turboréacteur comprend une structure annulaire amont fixe (11) et une structure annulaire aval (12) mobile en translation entre une position amont où une partie amont de ladite structure aval (12) est logée à l'intérieur de la structure amont (11) et une position aval où elle réalise une variation de la section d'éjection entre le capot primaire (15) de turboréacteur et la paroi radialement interne de la structure aval (12). La structure annulaire aval (12) comporte en outre des portes (20) intégrées en position fermée, en jet direct, dans la paroi de nacelle et déviant au moins une partie du flux d'éjection du turboréacteur, en position déployée en procurant une inversion de poussée après translation de la structure aval (12).

## Description

La présente invention concerne un inverseur de poussée à portes pour turboréacteur à double flux.

Le turboréacteur est équipé d'un conduit en arrière de la soufflante dont le but est de canaliser le flux secondaire dit froid. Ce conduit est constitué d'une paroi interne qui entoure la structure du moteur proprement dite en arrière de la soufflante et d'une paroi externe dont la partie amont vient en continuité du carter moteur qui entoure la soufflante. Cette paroi externe peut canaliser à la fois le flux secondaire et le flux primaire dans sa partie aval, ceci en arrière de l'éjection du flux primaire, dit chaud, dans le cas de nacelle à flux mélangés ou à flux confluents par exemple mais dans d'autres cas la paroi externe ne canalise que le flux secondaire pour des applications à nacelle dite à flux séparés.

Une paroi peut également caréner l'extérieur du moteur, c'est à dire l'extérieur du carter qui entoure la soufflante et l'extérieur de la paroi extérieure du conduit décrit ci-dessus. Ceci est notamment le cas d'ensembles propulsifs sont attachés sous les ailes ou à l'arrière du fuselage. Nous appellerons capotage extérieur l'ensemble constitué par la paroi extérieure du conduit et par la paroi extérieure de la nacelle.

La présente invention concerne un dispositif d'inversion dit "à portes" similaire à ce qui est déjà connu par FR-A-1 482 538, FR-A-2 030 034 et US 3 605 411 où les portes sont susceptibles, en position fermée, de s'intégrer dans la paroi de nacelle lors du fonctionnement en jet direct et,en position déployée, de pivoter autour de pivots latéraux sous l'action d'un moyen de commande des déplacements tels qu'un vérin de manière à dévier au moins une partie du flux d'éjection du turboréacteur à travers un espace constituant un puits d'inversion en assurant une inversion de poussée.

Des exemples de réalisation de ce type d'inverseur de poussée de turboréacteur à portes basculantes sont décrits notamment par FR-A-2 618 853, FR-A-2 618 852, FR-A-2 621 082, FR-A-2 627 807, FR-A-2 634 251, FR-A-2 638 207 et FR-A-2 651 021 dont est titulaire la demanderesse.

Les performances recherchées de l'inversion de poussée sont obtenues de manière généralement satisfaisante par ces dispositifs connus.

Il subsiste toutefois un problème d'adaptation du moteur aux diverses phases de vol qu'il rencontre notamment durant les phases de décollage et d'atterrissage de l'avion pour lesquelles les sections optimales de la tuyère secondaire d'éjection qui ont été définies pour les conditions de vol en croisière ne sont plus adaptées. Ce problème a été résolu pour un inverseur à grilles avec en exemple le brevet FR 2 622 929. Mais subsiste toujours pour un inverseur à pluralité de portes.

Un autre but de l'invention est également d'éviter une ouverture intempestive des portes de l'inverseur en vol.

Un inverseur de poussée de turboréacteur à double flux du type précité à portes répondant à ces conditions est caractérisé en ce que la structure annulaire aval est mobile en translation entre une position amont où une partie amont de ladite structure annulaire aval est disposée à l'intérieur d'un logement ménagé dans la structure amont fixe et une position aval, sous l'action d'un organe d'entraînement fixé sur la structure amont fixe, de manière à réaliser une variation de la section d'éjection entre le capot primaire de turboréacteur et la paroi radialement interne de ladite structure aval et en ce que lesdites portes d'inverseur sont solidaires de ladite structure aval mobile, les portes occupant la position fermée lorsque la structure aval occupe l'une de ses positions amont ou aval et les portes prenant la position déployée uniquement lorsque la structure aval occupe la position aval.

D'autres caractéristiques et avantages de l'invention seront mieux compris à la lecture de la description qui va suivre d'un mode de réalisation de l'invention en référence aux dessins annexés sur lesquels :
- la figure 1 représente une demi-vue schématique, en coupe longitudinale par un plan passant par l'axe de rotation d'un turboréacteur, d'un inverseur de poussée à portes pivotantes, suivant un mode de réalisation de l'invention en position croisière ;
- la figure 2 représente une vue schématique en perspective arrière de l'inverseur de poussée représenté à la figure 1 ;
- la figure 3 représente dans une vue analogue à celle de la figure 1 l'inverseur de poussée en position d'utilisation de la pleine puissance ;
- la figure 4 représente une vue schématique en perspective arrière de l'inverseur de poussée représenté à la figure 3 ;
- la figure 5 représente dans une vue analogue à celle de la figure 1 l'inverseur de poussée en position jet inversé ;
- la figure 6 représente une vue schématique en perspective arrière de l'inverseur de poussée représenté à la figure 5 ;
- la figure 7 représente un exemple d'entraînement de la structure mobile.

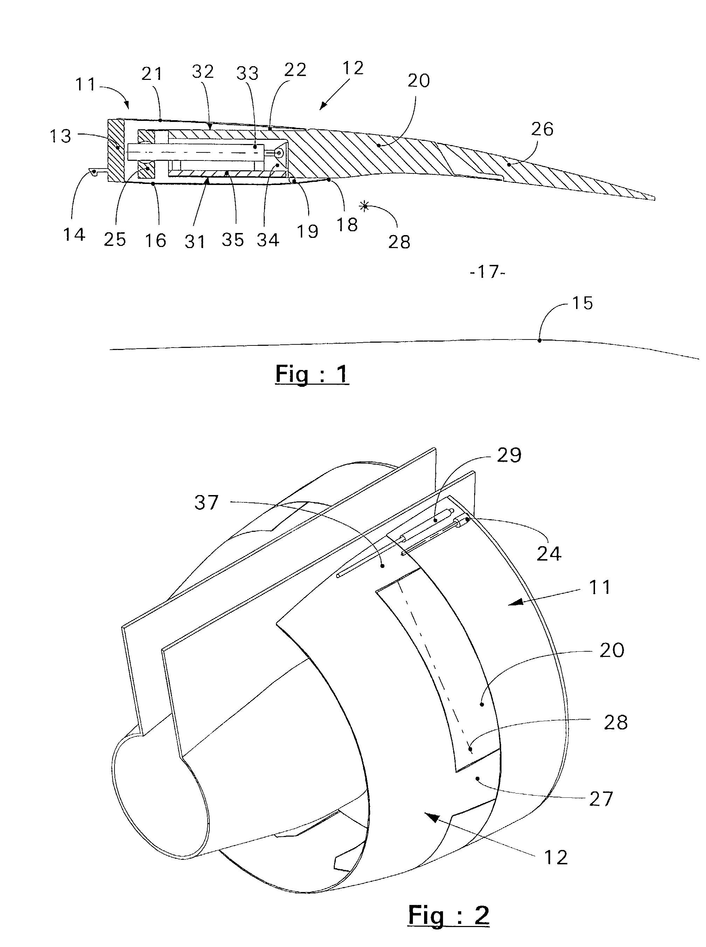

L'inverseur de poussée conforme à l'invention peut être réalisé suivant l'exemple représenté sur les figures 1 et 2 par une structure complète entourant le moteur. Dans cette disposition, l'inverseur ne comporte pas d'îlot en zone inférieure (dite 6 Heures)reliant le capot 15 entourant le moteur à la nacelle fixe amont 11. L'inverseur peut être aussi réalisé en deux demies-parties comportant un îlot à 6 Heures reliant le capot 15 entourant le moteur à la nacelle fixe amont 11.

L'inverseur représenté sur les figures 1 et 2 se compose d'une structure fixe 11 et d'une structure mobile 12. La structure fixe 11 comporte un cadre avant fixe 13 intégrant l'ensemble annulaire 14 de liaison au turboréacteur vers l'amont. Le cadre avant fixe 13 supporte une virole interne amont 16 réalisant une partie de la veine externe du canal annulaire 17 et dont l'extrémité aval 18 peut constituer le bord de déviation du puits d'inversion. Un capotage extérieur fixe 21 réalise une partie de la nacelle externe. Selon la nécessité, une étanchéité 22 peut être réalisée entre l'aval des zones externes 32 des portes 20 et/ou des zones externes 23 des poutres 27 et 37 et l'interne aval du capotage 21.

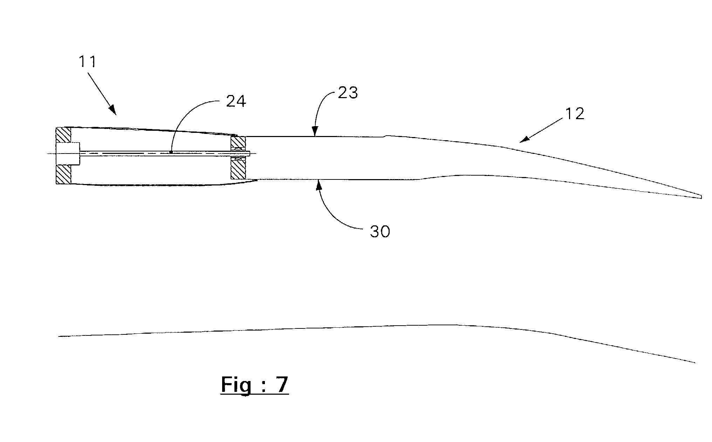

Une pluralité de vérins 24, hydrauliques, pneumatiques ou électriques, à piston ou à vis, reliés au cadre avant fixe 13, entraînent la partie aval mobile 12 en translation. Ils peuvent être synchronisés entre-eux ou indépendants. Ils sont en nombre et disposés selon la nécessité d'un fonctionnement optimal de déplacement de la structure mobile 12 Cette disposition est visible sur les figures 2 et 7.

La structure aval mobile 12 est constituée d'une structure avant 25 et d'une virole aval 26. Ces deux parties sont reliées par des poutres 27 et 37 à 12 heures et à 6 heures. Entre lesdites poutres et constituant la partie aval de la structure aval mobile 12, sont disposées des portes 20 de l'inverseur. Les poutres comportent les pivots 28 des portes 20. L'ensemble forme une partie des lignes externes du canal annulaire 17 et une partie des lignes externes nacelle. La structure avant 25 et les parties amont 23 et 32 des poutres et des portes, en position de croisière, se trouvent intégrées dans la structure amont fixe 11, la partie amont 32 de la porte 20 étant recouverte par le capotage extérieur fixe 21. L'étanchéité amont de la porte 20 en jet direct est assurée par un système d'étanchéité 19 à l'aval de la virole 16 de structure fixe amont. La partie amont externe 23 et interne 30 des poutres sont de forme cylindrique ou avec une légère incidence selon le jeu recherché en final entre l'aval du capotage extérieur 21 et l'amont de la structure mobile 12.

Les poutres supérieures 37 et les poutres inférieures, pour le cas de nacelle avec un îlot 6 heures, comportent un guidage coulissant 29, comme par exemple rail et coulisseau avec la structure fixe 11.

Des éléments coulissants, comme par exemple des fourreaux sur colonnes, peuvent être installés dans les poutres 27 pour aider à un meilleur guidage de la partie aval mobile 12. Ces éléments peuvent être associés aux vérins ou bien être indépendants.

Les portes s'inscrivent dans la même définition de lignes que celle de la structure mobile 12. Elles ont une technologie identique à celle des inverseurs à portes connus ; leur nombre peut être de deux, trois voire plus suivant les performances recherchées. L'amont de la porte peut comporter un retour de structure vers l'interne en forme de chanfrein, cette partie restant à l'intérieur de la structure fixe 11 lors des phases de variation de l'éjection mais pouvant aider à recentrer la porte 20 par rapport à l'aval de la virole externe 21 de la partie fixe 11 en cas de problème de verrous ou tout autre cas ne permettant pas une refermeture normale de la porte.

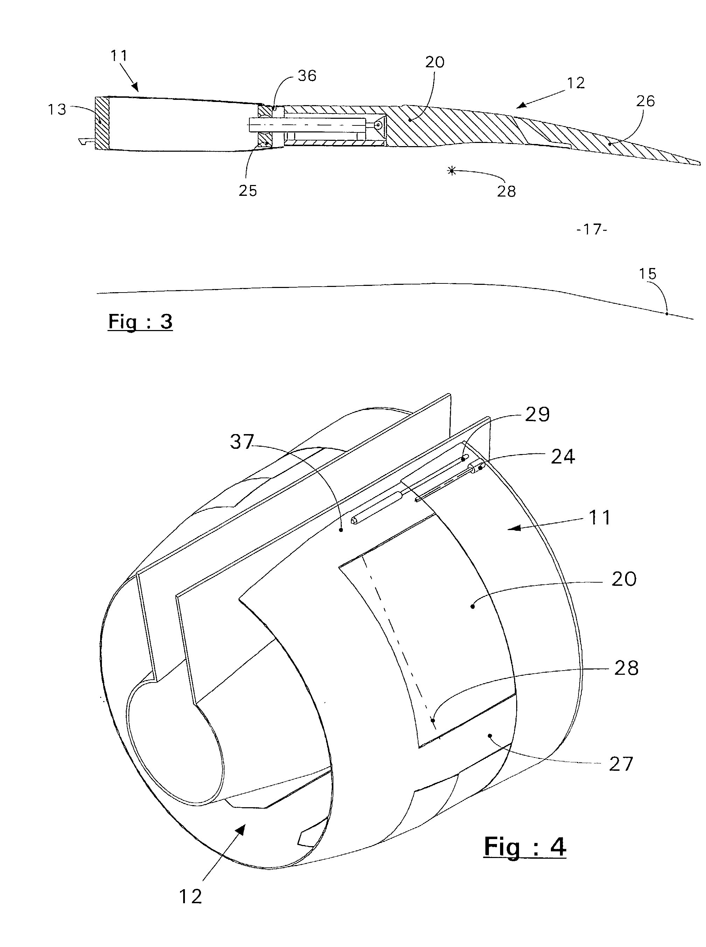

L'entraînement des portes en rotation peut être réalisé, comme montré sur la figure 3, par un vérin central 33 mais aussi par n'importe quel autre système connu de l'homme de métier par exemple vérin dans poutre ou en aval des portes. Ces vérins peuvent être hydrauliques, pneumatiques, électriques, à vis, télescopiques ou autres. Dans le cas d'entraînement par un vérin central 33, la cavité de porte 34 est obturée par un carénage vérin 35 associé audit vérin et rendu étanche en périphérie avec la surface interne 31 de la porte 20.

Lorsque la structure mobile 12 est suffisamment avancée dans la structure fixe 11, l'étanchéité 19 entre l'aval de la virole interne fixe 16 et la partie milieu de l'interne 31 de la porte 20 peut rendre ladite porte équilibrée voire auto-fermante. La porte 20 peut comporter un joint 36 à l'amont de celle-ci selon la nécessité de conserver une étanchéité complète dans toutes les positions possibles de la structure mobile 12.

Les figures 3, 4 et 7 montrent l'utilisation de la nacelle de l'inverseur pour la variation de la section d'éjection. Pour cela, les vérins 24 entraînent la structure aval mobile 12 en translation jusqu'à la position désirée pour répondre aux performances recherchées. Dans le cas du déplacement maximum nécessaire aux performances, l'amont de la porte 20 peut selon le choix retenu, avoir sa partie amont restant à l'intérieur de la structure amont fixe 11. Cette disposition empêche un déploiement intempestif dans toutes les phases de vol et permet d'alléger le système de verrouillage des portes.

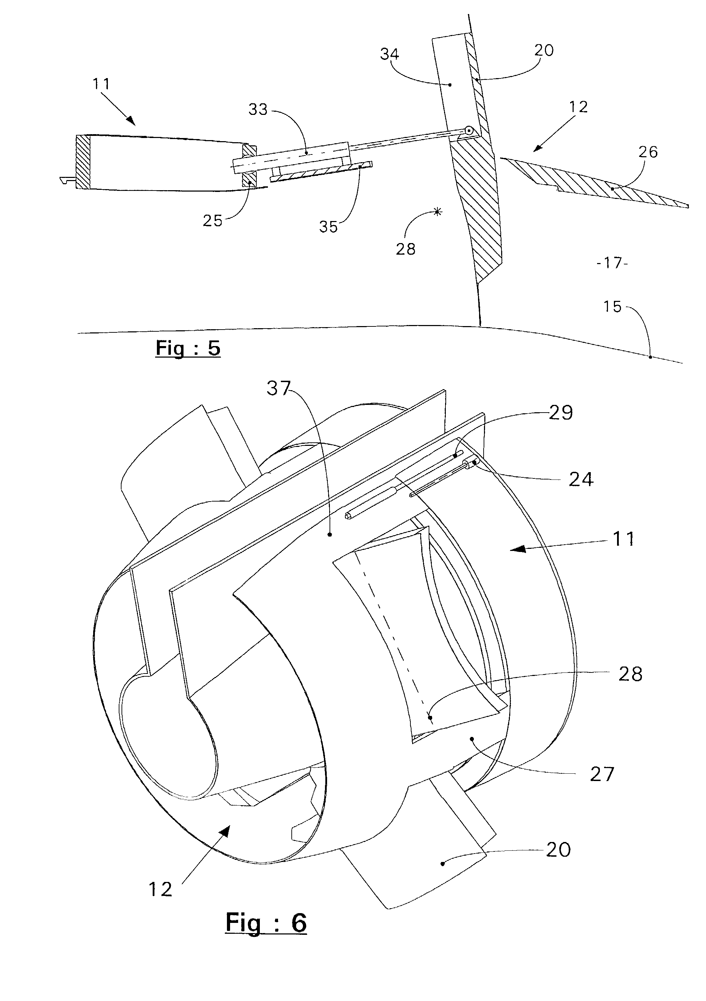

les figures 5 et 6 représentent l'inverseur de poussée en mode d'inversion du jet. Les vérins 24 entraînent la structure mobile 12 jusqu'à une position qui libère toute la porte 20 de l'aval de la structure fixe 11. Les vérins 33 entraînent alors en rotation les portes 20 autour de leur pivot 28 jusqu'à la position désirée pour réaliser l'inversion du flux circulant dans le canal annulaire 17. Le schéma de commande d'entraînement de la porte 20 peut être lié à celui de l'entraînement de la structure mobile 12 ou bien être indépendant.

Le schéma du système de commande peut permettre, la manoeuvre d'inversion de jet à la suite d'une utilisation en variation d'éjection ou directement en inversion de jet.

Cette configuration de porte, pour la phase d'inversion, peut être associée à un système à panneaux mobiles ou à un système de becquet mobile ou tout autre système connu de l'homme de métier permettant d'utiliser un retour de structure à l'extrémité amont de la porte 20 en position d'inversion de jet. Une cavité de fond de porte peut être appliquée au détriment des performances en phase d'utilisation de la variation de la section d'éjection.

Des recentreurs ou des guides peuvent être utilisés entre l'interne de la structure fixe 11 et la partie amont de la structure mobile 12. Ils se situent en n'importe quelle zone de la nacelle, ils peuvent être utilisés en contact ou par imbrication.

La structure mobile 12 peut ne pas comporter de structure aval rigide 26. Dans ce cas, c'est l'aval des portes 20 et des poutres 27 et 28 qui forment l'extrémité aval de la section d'éjection. Les autres caractéristiques énoncées dans l'invention restent valables pour ce concept.

## Revendications

1. Inverseur de poussée de turboréacteur à double flux comportant une structure annulaire amont fixe (11), une structure annulaire aval (12) et des portes (20) susceptibles, en position fermée, de s'intégrer dans la paroi de nacelle lors du fonctionnement en jet direct et, en position déployée, de pivoter autour de pivots latéraux (28) sous l'action d'un moyen de commande des déplacements tel qu'un vérin (33) de manière à dévier au moins une partie du flux d'éjection du turboréacteur à travers un espace constituant un puits d'inversion en assurant une inversion de poussée caractérisé en ce que la structure annulaire aval (12) est mobile en translation entre une position amont où une partie amont de ladite structure annulaire aval (12) est disposée à l'intérieur d'un logement ménagé dans la structure amont fixe (11) et une position aval, sous l'action d'un organe d'entraînement (24) fixé sur la structure amont fixe (11), de manière à réaliser une variation de la section d'éjection entre le capot primaire (15) de turboréacteur et la paroi radialement interne de ladite structure aval (12) et en ce que lesdites portes (20) d'inverseur sont solidaires de ladite structure aval mobile (12), les portes (20) occupant la position fermée lorsque la structure aval (12)occupe l'une de ses positions amont ou aval et les portes (20) prenant la position déployée uniquement lorsque la structure aval (12) occupe la position aval.

2. Inverseur de poussée de turboréacteur à double flux selon la revendication 1 caractérisé en ce que la structure annulaire aval mobile (12) est constituée d'une structure avant (25), de poutres longitudinales (27, 37) encadrant des portes (20) susceptibles de pivoter autour de pivots (28) portés par lesdites poutres (27, 37).

3. Inverseur de poussée de turboréacteur à double flux selon la revendication 2 caractérisé en ce que les poutres (37) comportent un guidage coulissant (29) de déplacement.

4. Inverseur de poussée de turboréacteur à double flux selon la revendication 2 caractérisé en ce que la partie aval des portes et des poutres constitue l'extrémité aval de la structure annulaire mobile.

5. Inverseur de poussée de turboréacteur à double flux selon la revendication 2 caractérisé en ce que l'extrémité aval de la structure annulaire mobile est constituée par une virole aval (26) rigide disposée en aval des portes (20).

6. Inverseur de poussée de turboréacteur à double flux selon l'une quelconque des revendications 1 à 5 caractérisé en ce qu'un dispositif d'étanchéité (19) est disposé entre la zone aval de la virole interne (16) de la structure amont fixe (11) et la porte (20) de manière à rendre ladite porte (20) auto-fermante ou équilibrée.

7. Inverseur de poussée de turboréacteur à double flux selon l'une quelconque des revendications 1 à 6 caractérisé en ce que le vérin (33) de commande du pivotement des portes (20) est associé à un carénage (35) étanche avec la surface interne de la porte (20) en position fermée.

8. Inverseur de poussée de turboréacteur à double flux selon la revendication 1 caractérisé en ce que dans une position aval de la structure annulaire aval mobile (12) correspondant à un fonctionnement en variation de section d'éjection, une partie amont des portes (20) reste bloquée à l'intérieur de la structure amont fixe (11).
